# EUROPEAN PATENT APPLICATION

(11) **EP 1 842 643 A2**
(43) Date of publication of application: **10.10.2007**
(21) Application number: 07251382.3
(22) Date of filing: 29.03.2007
(51) Int. Cl.: B28C 5/42, B28C 7/16

(54) **Mixer truck**

(30) Priority: 07.04.2006 GB 0606981
(71) Applicant: Hymix Limited, Stafford Park 11 Telford, Shropshire, TF3 3BD (GB)
(72) Inventor: Humpish, Nick c/o Hymix Limited, Telford, Shropshire TF3 3BD (GB)
(74) Representative: Gosnall, Toby

(57) **Abstract**

A concrete mixing vehicle (100) is described having a metering device (110) for measuring the volume of concrete delivered. Preferably the metering device comprises a volumetric mixer (116) provided with means of converting the number of rotations to a volume of concrete delivered.
The meter (110) may be in sections (402, 404) which can be articulated together (406). In a preferred embodiment the metering device can be moved from a storage position (Fig. 1) to an in-use position (Fig. 4) at a delivery site.

## Description

This invention relates to the field of mixer trucks, and in particular but not exclusively to the field of metering concrete mixer trucks. In this description, the term 'concrete' is intended to cover cement, and indeed any other substance that may be dispensed from a concrete mixing truck.

As the skilled person will appreciate, concrete delivery is a specialised field. First, concrete is preferably kept on the move during transport, both to ensure that the concrete is thoroughly mixed and to ensure the concrete does not 'go off' or set. This resulted in the innovation of the concrete mixer truck, a mixing screw contained within a rotating drum mounted on a chassis. Such a drum generally off-loads concrete by reversing the direction of rotation, the screw then operating as an Archimedes Well to lift the concrete to an opening. Such a system supplies 'ready mix' concrete.

This system works well where large amounts of concrete are required. The drum may then be filled to capacity or near capacity and the full load delivered. However, where small amounts are required, generally the concrete must be mixed on site. This is because concrete is sold by weight and it is complex to accurately measure concrete out from a drum. Where a full load is being delivered, this is not a problem; ingredients may be weighed into the drum and the resultant weight of the load can be calculated. It has been suggested in the past that load cells may be fitted to concrete vehicles and that the difference in weight when a part load is delivered. However, such load cells tend to be inaccurate and this has not been accepted, in the UK at least, as a scheme by the Department of Trade and Industry that would ensure fairness to the customer. Further, load cells are expensive and can easily be damaged upon the environment provided by a concrete mixer truck.

Mixing concrete on site has its own problems. For one, the standard of the mix in generally lower than if the concrete is mixed in a mixer truck.

According to a first aspect of the present invention there is provided a mixer truck comprising a mixer drum and a meter, wherein the meter is arranged to measure the volume of concrete dispensed from the drum.

This is advantageous as it provides a convenient means of measuring ready mixed, and generally high quality, concrete. Further, providing the meter on the truck means that a metering device need not be maintained at the delivery site, and therefore the cost of the device and the maintenance of the device is the responsibility of the concrete supplier.

Preferably, the meter comprises a volumetric screw. The screw may be arranged to mix the concrete as it is dispensed. This is advantageous as a volumetric screw provides a convenient means for measuring volumes of concrete. Further, admixtures and/or pigments may be added to the ready mixed concrete as it is dispensed from the mixer drum. In prior art concrete mixers, such admixtures and pigments have been added directly into the open end of the drum. In the novel truck now described, the admixtures and/or pigments may be added at a lower height and therefore save the trouble and risk associated with climbing a ladder or some such apparatus to introduce material into the drum. The screw then acts to mix the admixture and/or pigment into the ready mix concrete. It will be appreciated that prior art volumetric screws are intended to mix as well as meter the concrete. In embodiments where no mixing is required, a volumetric screw according to the present invention may be shorter than such prior art screws.

Preferably, the meter is movably mounted on the mixer truck.

The meter may assume a stored position when not in use, for example during the drive to a delivery site, and an 'in-use' position when the meter is being used. This is advantageous as the meter could be stored for transit.

In a particular embodiment, the meter may be arranged to pivot about one or more points along its length. This may be particularly advantageous when the meter is a volumetric screw, as these tend to be of several meters in length.

Alternatively, or additionally, the meter may be pivoted about an end region.

Any pivot provided may be through a substantially vertical axis.

The meter may be arranged such that is lies substantially over the body of the truck when not in use and in the stored position. Such an arrangement is convenient because it may protect the meter and help to prevent it being damaged; the body may act as a barrier to impacts on the meter.

The meter may be arranged such that it may be moved from the stored position to an in-use position in order out to deliver concrete.

Alternatively or additionally, the meter could be pivoted about a substantially horizontal axis. The meter may then be positioned such that it is displaced from the horizontal when in the stored position and moved to the in-use position. In one particular embodiment, the stored position may be substantially vertical.

The skilled person will appreciate that a metering volumetric screw may not be horizontal to deliver concrete. It may instead lie on a slight incline which may assist the flow of concrete through the screw and/or may improve the accuracy of measurement of volume. The incline may be an upward incline or a downward incline.

The meter may have an input end region arranged to receive concrete from the mixer drum of the truck and an output end region arranged to output concrete therefrom.

Providing a meter having one or more pivots along the length thereof may have the further advantage that the output end region of the mixer may be altered without altering the position of the truck. The meter may be pivoted until its output end region is above the desired delivery site.

Alternatively or additionally, the meter may be slidably mounted on the mixer truck.

Preferably, the truck comprises a locking means arranged to maintain the meter in the stored and/or the in-use position.

Preferably, the meter comprises a monitoring means arranged to monitor the volume of concrete delivered. In embodiments where the meter is a volumetric screw, the monitoring means may comprise a revolution counter and a may comprise a conversion means arranged to convert the number of rotations into a volume of concrete.

The meter may comprise a plurality of relatively moveable sections. This may enable a larger or longer meter to be used which may increase the accuracy and/or the mixing capabilities of the meter while requiring less space in the stored position when compared to a meter of a single section.

Additionally, the meter may be able to deliver concrete around corners and/or further from the truck than was previously possible. Given a parked truck, the range of delivery positions could be increased.

The sections may be relatively movable in a horizontal and/or vertical plane.

In an alternative or additional embodiment, the meter may be telescopic.

The mixer truck may further comprise a control means arranged to control the movement of the meter. Such control means may be advantageous as it may avoid the need to adjust the meter manually.

According to a second aspect of the invention there is provided a method of delivering concrete comprising providing a metering device and a mixer drum on a mixer truck, mixing a load of concrete in the drum, locating the mixer truck at the delivery site, dispensing a portion of the load of concrete onto the metering device and using the metering device to determine the volume of concrete dispensed.

The portion may be a full load of concrete or less than all of a load of concrete.

An advantage of such a method is that it allows part of a full load of concrete to be delivered from the mixer truck.

The method may further comprise adding admixtures and/or pigment to the concrete as it is dispensed onto the metering device. This may be advantageous as the admixture and/or pigment may be added at a generally lower height than in prior art vehicles.

Preferably, the method further comprises rotating at least a portion of the metering device and using the number of rotations to determine the volume of concrete dispensed. Such a method provides a convenient means of measuring concrete, as devices such as volumetric screws and flow meters, which measure volume by counting rotations, are mechanically simple and yet robust.

The method may comprise moving the meter between a stored position and an 'in-use' position for example before the concrete is dispensed. Alternatively, if the concrete is to be dispensed without being measured, the meter could remain in the stored position during delivery. Such a method may provide a convenient way of keeping the metering device out of way when it is not in use.

The method may comprise moving the meter between its stored position and its 'in-use' position by pivoting and/or sliding the meter.

The method may comprise providing the meter in sections and moving the sections relative to each other to place the meter in the stored position and one or more of an 'in-use' position.

The method may comprise moving the meter between positions manually, or mechanically, maybe controlled using electronic signals.

According to a third aspect of the invention there is provided a method of delivering a part load of concrete comprising providing a metering device and a mixer drum on a mixer truck, mixing a full load of concrete in the drum, locating the mixer truck at a delivery site, dispensing a portion of the load of concrete onto the metering device and using the metering device to determine the volume of concrete dispensed.

Embodiments of the invention are now described with reference to the accompanying Figures of which:
**Figure 1** shows a concrete mixer truck according to one embodiment of the present invention in a first configuration;
**Figure 2** shows a top view of a volumetric screw arranged to be mounted the truck of Figure 1;
**Figure 3** shows the concrete mixer truck of Figure 1 in a second configuration; and
**Figure 4** shows a second embodiment of a volumetric screw mounted on a mixer truck.

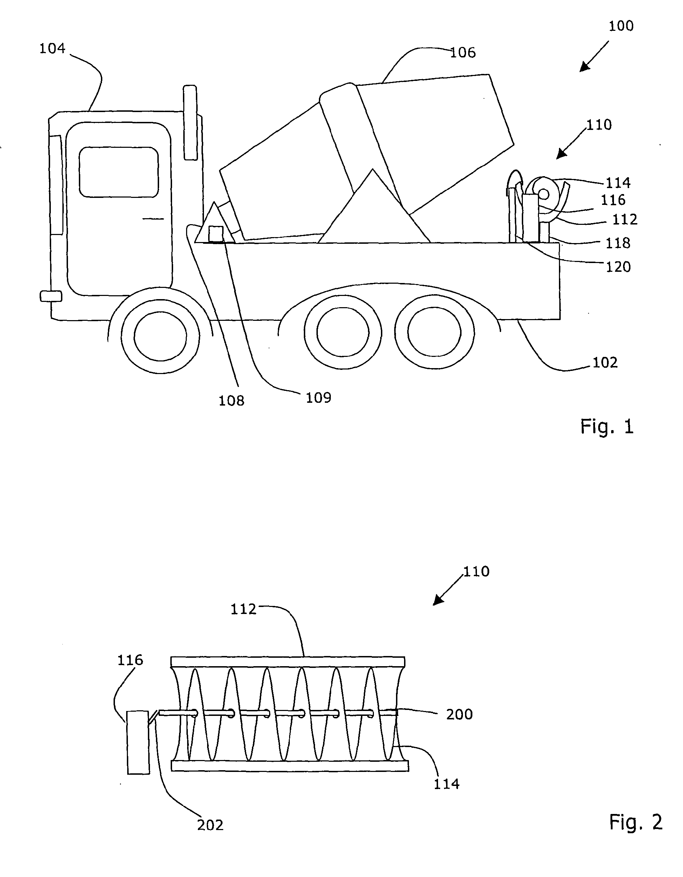

The concrete mixing vehicle 100 shown in Figure 1 comprises a truck base 102 on which is mounted a cab 104 and a rotatable drum 106 driven by a motor 108. Linked to the motor 108 is a controller 109, arranged to control the speed and direction of rotation of the drum 106.

There is a flow meter (not shown) attached to the drum 106 arranged to determine the quantities of liquids poured into the drum. The flow meter comprises a 'propeller meter', i.e. a propeller that turns as a liquid flows past. A reed switch on the propeller is arranged to provide electrical pulses indicating the number of revolutions performed by the propeller and thereby indicated the volume of liquid that has passed over the propeller.

The truck 100 further comprises a volumetric meter 110, which may conveniently be referred to as a meter, mounted on the rear of the truck 100. The volumetric meter 110, which is shown in greater detail in Figure 2 in a plan view thereof, comprises substantially semi-cylindrical trough 112 in which a close-fitting Archimedes screw 114 is arranged to rotate on an axle 200 shown in Figure 2. There is also shown a motor 116 which is attached to the truck base 102 and is arranged to rotate the axle 200 and the screw 114. The motor 116 comprises processing circuitry which provides a monitoring means and further comprises revolution counter arranged to count the number of rotations made by the screw 114 and a conversion means arranged to convert the number of revolutions to a volume of concrete. The motor 116 is attached to the axle 200 via a universal joint 202. The volumetric meter 110 comprises an input end region 204 adjacent the motor 116 and an output end region 206 at the opposite end thereof.

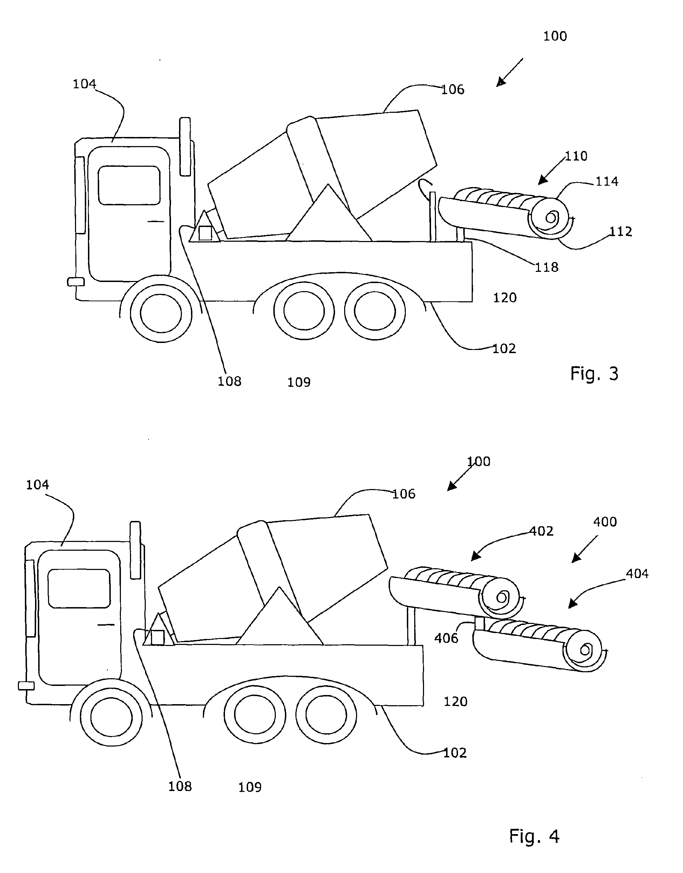

The volumetric meter 110 is mounted on a vertical pivoting support 118 arranged at one end of the meter 110 such that an end of the meter 110 can be swung out over the back of the truck base 102 to take an 'in-use' position as shown in Figure 3. There is also provided a releasable locking means 120, which is used to secure the volumetric meter 110 in the position shown in Figure 1, or the 'stored' position.

In use of the truck 100, the volumetric meter 110 is generally stored in the configuration shown in Figure 1, i.e. aligned over the truck base 102 roughly parallel with the back edge of the truck base 102. The locking means 120 is used to ensure that the meter 110 cannot move from that position. The truck 100 may then be used by filling the drum 106 and the truck 100 driven to a site to make a concrete delivery.

On arrival at the site, the releasable locking means 120 is released and the volumetric meter 110 manually moved to take the 'in-use' position shown in Figure 3. The degree to which the meter 110 is pivoted may depend on the exact location at which delivery is required. The drum 106 is then controlled such that concrete is dispensed from its open end and allowed to fall on to the input end region 204 of the meter 110. The motor 116 is then used to rotate the axle 200 and the screw 114 such that concrete is moved along the length of the screw 114 (from the input end region 204 to the output end region 206) and processing circuitry uses the revolution counter to count the number of rotations made by the screw 114 and the conversion means arranged to convert the number of revolutions to a volume of concrete. The volume of concrete delivered is then stored to allow a charge to be made.

In alternative, or additional, embodiments the volumetric meter 110 may be moved from the stored position to the 'in-use' position automatically, or semi-automatically. In such embodiments the volumetric meter 110 may be moved by any suitable means such as hydraulics, pneumatics, electric motors, or the like.

Figure 4 shows a second embodiment of a mixer truck in which like features to the above-described mixer truck are labelled with like numbers. In this embodiment, the meter comprises an articulated meter 400 comprising two relatively positionable volumetric screw portions, a first portion 402 and a second portion 404. The first 402 and second 404 portions are connected to each other at a pivot joint 406. Further, their axles 200 are connected via universal joints. The articulated meter 400 is shown in one possible 'in-use' position although it will be appreciated that the position may be varied. The articulated meter 400 may for example be employed to deliver concrete around a corner from the truck 100.

As is apparent from Figure 4, the articulated meter 400 may be placed in a stored position by being rotated about the pivot joint 406 such that it is folded back on itself and the second portion 404 is arranged below and substantially in line with the first portion 402. The first 402 and second 404 portions may then be rotated about the vertical pivoting support 118 such that they are above the truck base 102, roughly parallel with the back of the truck base 102. The locking means 120 may then be employed to lock the articulated meter 400 in the stored position.

The skilled person will appreciate that there are many possible embodiments of the invention. For example, a control unit could be provide in the cab of the truck 100 and used to control the position of the meter 110, 400 and/or the relative position of the sections of the articulated meter 400. An articulated meter could instead be provided which folded in a vertical, rather than horizontal, plane. The meter 110, 400 may instead comprise sections and may be dismantled for storage and reconnected, for example bolted together, for use. A telescopic meter arranged to nest one portion inside another when not in use could be provided.

## Claims

1. A mixer truck comprising a mixer drum and a meter wherein the meter is arranged to measure the volume of concrete dispensed from the drum.

2. A mixer truck according to claim 1 wherein the meter comprises a volumetric screw, in particular an Archimedes screw, located in a trough.

3. A mixer truck according to claim 1 wherein the meter is movably mounted on the mixer truck and is movable between at least a first, storage position and a second, in use, position.

4. A mixer truck according to claim 3 wherein the meter is arranged to pivot about one or more positions along its length.

5. A mixer truck according to claim 4 wherein the meter is arranged to pivot about an end region of the meter.

6. A mixer truck according to any one of claims 4 or 5 wherein the meter pivots through a substantially vertical axis.

7. A mixer truck according to claim 1 wherein a position of an output end of the meter may be adjusted without moving the truck.

8. A mixer truck according to claim 1 wherein the meter is slideably mounted on the truck.

9. A mixer truck according to any preceding claim wherein the meter comprises a plurality of relatively moveable sections.

10. A mixer truck according to claim 9 wherein the meter comprises at least at least first and second sections connected together at a first articulated universal joint.

11. A mixer truck according to any preceding claim wherein the truck further comprises a control means arranged to control movement of the meter.

12. A mixer truck according to claim 2 wherein the meter comprises monitoring means and the monitoring means further comprises a revolution counter.

13. A method of delivering concrete comprising providing a metering device and a mixer drum on a mixer truck, mixing a load of concrete in the drum, locating the mixer truck at a delivery site, dispensing a portion of the load of concrete onto the metering device and using the metering device to determine a volume of concrete dispensed.

14. A method of delivering concrete according to claim 13 wherein the portion is less than all of a load of concrete.

15. A method of delivering concrete according to claim 13 comprising adding admixtures and/or pigments to the concrete as it is dispensed onto the metering device.

16. A method of delivering concrete according to claim 13 wherein at least a portion of the metering device is rotated and a number of rotations is used to determine the volume of concrete dispensed.

17. A method of delivering concrete according to claim 16 wherein the metering device comprises a volumetric screw or flow meter.

18. A method of delivering concrete according to any one of claims 13 to 17 wherein the metering device is moved from a first stored position to a second in use position before dispensing the concrete.

19. A method of delivering concrete according to claim 18 wherein the metering device is moved from its first storage position by pivoting and/or sliding the metering device.

20. A method of delivering concrete according to any one of claims 13 to 19 wherein the metering device is provided in two or more sections and the sections are moved relative to each other in order to place the metering device in at least one of the stored position and one or more in use positions.

21. A method of delivering concrete according to any one of claims 18 to 20 wherein movement of the metering device is controlled by means of electric signals.
